# FASCICULE DE BREVET EUROPEEN

(11) **EP 3 607 228 B1**
(45) Date de publication et mention de la délivrance du brevet: **01.12.2021**
(21) Numéro de dépôt: 18717875.1
(22) Date de dépôt: 04.04.2018
(51) Int. Cl.: F16H 57/04

(54) **REDUCTEUR DE VITESSE A TRAIN EPICYCLOÏDAL DE TURBOMACHINE COMPRENANT UN PORTE-SATELLITES COMPRENANT UN ROUET.**
UNTERSETZUNGSGETRIEBES FÜR EIN PLANETENGETRIEBE EINER TURBOMASCHINE MIT EINEM PLANETENTRÄGER
PLANETARY GEAR SPEED REDUCER OF A TURBOMACHINE WITH A PLANET CARRIER

(30) Priorité: 06.04.2017 FR 1752991
(43) Date de publication de la demande: 12.02.2020
(73) Titulaire: Safran Transmission Systems, 92700 Colombes (FR)
(72) Inventeur: CHARRIER, Mathieu, Jean, 77550 Moissy-Crayamel (FR); BECK, Guillaume, Julien, 77550 Moissy-Crayamel (FR); DI GIOVANNI, Jean-Charles, Michel, Pierre, 77550 Moissy-Crayamel (FR); DOMBEK, Alexis, Claude, Michel, 77550 Moissy-Crayamel (FR); GEDIN, Patrice, Jocelyn, Francis, 77550 Moissy-Crayamel (FR); MORELLI, Boris, Pierre, Marcel, 77550 Moissy-Crayamel (FR)
(74) Mandataire: Gevers & Orès
(86) Numéro de dépôt international: PCT/EP2018/058647
(87) Numéro de publication internationale: WO 2018/185186

(56) Documents cités:
- EP-A1- 2 078 888
- DE-A1-102010 060 147
- FR-A1- 3 036 763
- US-A1- 2016 025 208

## Description

### Domaine de l'invention

La présente invention concerne notamment un réducteur de vitesse à train épicycloïdal de turbomachine comprenant un rouet.

### Etat de la technique

Un réducteur de vitesse à train épicycloïdal d'une turbomachine d'aéronef comprend classiquement un solaire accouplé à un premier arbre et une couronne s'étendant autour du solaire. Des satellites sont disposés entre le solaire et la couronne et sont engrenés avec eux et portés par un porte-satellites accouplé à un second arbre.

La figure 1 illustre un porte-satellites 10 tel que décrit dans la demande FR-A1-3 036 763. Ce porte-satellites 10 comprend un corps cylindrique 12 destiné à être accouplé au second arbre et relié à une extrémité longitudinale à une paroi annulaire 14 de support d'axes 16 parallèles de rotation des satellites 18. Les axes 16 sont régulièrement répartis autour de l'axe A de rotation du porte-satellites et sont solidaires à l'une de leurs extrémités longitudinales de la paroi annulaire 14 précitée. Un rouet 20 est rapporté et fixé à leurs extrémités longitudinales opposées et fixées à ces dernières.

Le rouet 20 est solidaire du porte-satellites 10 du fait de sa liaison aux axes 16 de support des satellites 18. Le rouet 20 est donc destiné à être mis en rotation en fonctionnement autour de l'axe A et former ainsi un rotor du réducteur.

Le rouet 20 a une forme générale annulaire autour de l'axe A et comporte à sa périphérie externe des moyens de support des axes 16 de rotation des satellites 18. Le rouet 20 comprend en outre des moyens de lubrification des paliers montés entre les axes 16 et les satellites 18, et des dents d'engrènement des satellites 18 et du solaire 22. Ces moyens de lubrification comportent une gorge annulaire 24 située à la périphérie interne du rouet et débouchant radialement vers l'intérieur.

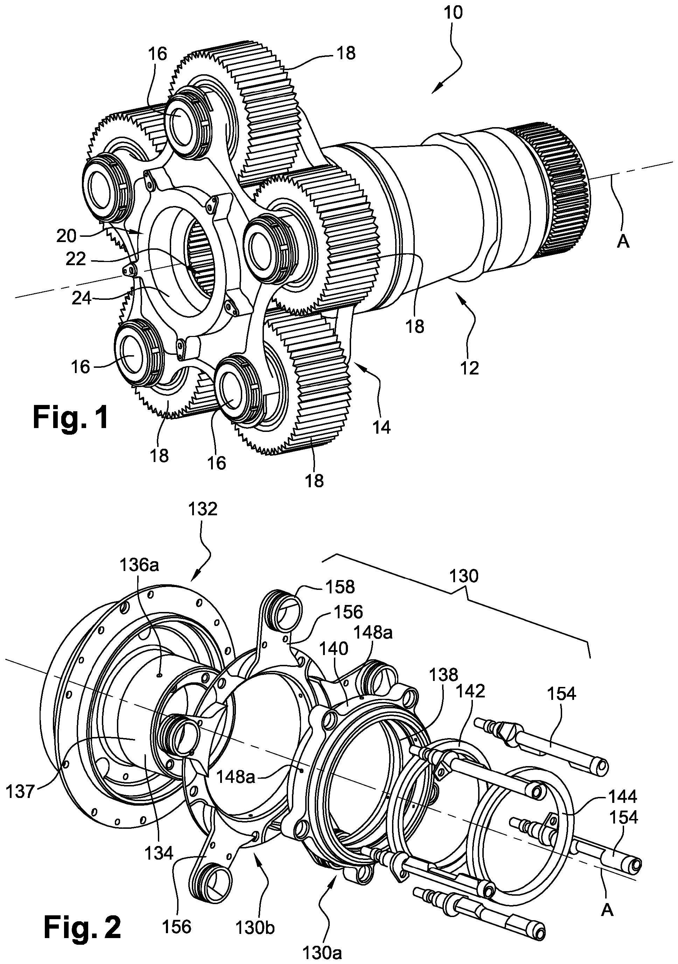

Des injecteurs de lubrifiant, portés par un stator du réducteur ou de la turbomachine, sont disposés radialement à l'intérieur du rouet (ils ne sont pas représentés dans la figure 1), et projettent du lubrifiant directement dans la gorge 24 du rouet, pour alimenter des moyens d'alimentation et/ou de pulvérisation de lubrifiant.

Le lubrifiant est amené jusqu'aux injecteurs par une pompe d'un groupe de lubrification de la turbomachine, qui délivre un débit prédéterminé de lubrifiant aux injecteurs. Avec la technologie actuelle décrite ci-dessus, le lubrifiant projeté dans la gorge est acheminé jusqu'aux moyens d'alimentation et/ou de lubrification par effet centrifuge uniquement. Cependant, on constate en pratique que les dentures des satellites et du solaire peuvent ne pas être suffisamment alimentées en lubrifiant, ce qui est problématique. Cette sous-alimentation en huile peut être due à un manque d'énergie suffisante transmise au fluide par effet centrifuge, ou à une répartition d'huile instable dans le rouet. Un phénomène d'aspiration d'huile des paliers peut notamment diminuer le débit d'huile alimentant les dentures.

On a déjà proposé de pallier au problème de répartition d'huile dans le rouet en prévoyant deux gorges annulaires distinctes à la périphérie interne du rouet, qui sont alimentées indépendamment l'une de l'autre et alimentent respectivement les moyens d'alimentation et/ou de pulvérisation de lubrifiant des dentures d'une part, et des axes des satellites d'autre part. Cependant, ce type de rouet est complexe, coûteux à réaliser, et ne répond pas au manque d'énergie apportée au fluide pour atteindre les dentures

Une solution existante propose de récupérer la pression d'huile moteur en ajoutant deux joints dynamiques de part et d'autre de la gorge annulaire. Cette solution permet de coupler la pression centrifuge générée par le rouet et la pression d'huile fournie par le moteur. Cependant, cette solution ne permet pas de ségréger l'huile allant aux paliers et l'huile allant aux dentures. La répartition d'huile reste instable dans le rouet.

La présente invention propose un perfectionnement à ces technologies, qui apporte une solution simple, efficace et économique au problème de lubrification des dentures des satellites et du solaire d'un réducteur à train épicycloïdal.

### Exposé de l'invention

Conformément à l'invention, on parvient à cet objectif avec un réducteur de vitesse à train épicycloïdal de turbomachine comprenant un porte-satellites avec un rouet, ledit rouet étant destiné à être solidaire en rotation dudit porte-satellites et à être mis en rotation autour d'un axe A dudit réducteur, ledit rouet ayant une forme générale annulaire autour dudit axe et comportant des moyens de support d'axes de rotation de satellites dudit réducteur, ledit rouet comportant des moyens de lubrification de dentures desdits satellites et de paliers desdits axes, lesdits moyens de lubrification comportant une gorge annulaire située à la périphérie interne dudit rouet et débouchant radialement vers l'intérieur, ladite gorge étant reliée à des moyens d'alimentation et/ou de pulvérisation de lubrifiant, caractérisé en ce que le rouet comporte des moyens annulaires d'étanchéité dynamique situés à la périphérie interne dudit rouet, de part et d'autre de ladite gorge, et configurés pour coopérer avec un stator du réducteur ou de la turbomachine destiné d'une part à s'étendre à l'intérieur du rouet et coaxialement à ce dernier et d'autre part à alimenter en lubrifiant ladite gorge.

Contrairement à la technologie antérieure, des moyens d'étanchéité dynamique sont prévus entre le rouet formant rotor, et le stator qui alimente en lubrifiant le rouet. Par définition, ces moyens d'étanchéité sont destinés à assurer une étanchéité entre le rotor (rouet) et le stator en fonctionnement. Cette étanchéité est importante pour que le débit ou la pression de lubrifiant fourni pas la pompe d'alimentation en lubrifiant du stator soit conservé dans les moyens de lubrification du rouet. De plus, la coopération à étanchéité du rotor et du stator permet en outre à l'ensemble de fonctionner comme une pompe additionnelle additionnant au débit précité de la pompe les effets du champ centrifuge généré par cette pompe additionnelle, et ainsi d'assurer une lubrification optimale des dentures des satellites et du solaire, et des paliers des axes de satellites.

Le porte-satellites selon l'invention peut comprendre une ou plusieurs des caractéristiques suivantes, prises isolément les unes des autres, ou en combinaison les unes avec les autres :
- le rouet est réalisé en deux parties annulaires, respectivement radialement externe est interne, s'étendant sensiblement l'une autour de l'autre, ladite partie radialement externe comprenant lesdits moyens de support et ladite partie radialement interne comprenant ladite gorge et portant lesdits moyens d'étanchéité ;
- ladite partie radialement interne comporte des canaux sensiblement radiaux et des conduits sensiblement radiaux de passage de lubrifiant, dont les extrémités radialement internes débouchent dans ladite gorge ;
- lesdits canaux et lesdits conduits sont régulièrement répartis autour dudit axe, chacun desdits canaux étant disposé entre deux conduits adjacents et chacun desdits conduits étant disposés entre deux canaux adjacents ;
- lesdits canaux débouchent à leurs extrémités radialement externes sur une surface cylindrique externe de ladite partie radialement interne, qui est destinée à être au moins en partie recouverte par ladite partie radialement externe ;
- lesdits conduits sont en communication fluidique avec des premières extrémités longitudinales de gicleurs de lubrifiant, qui sont montés en porte-à-faux à la périphérie externe de ladite partie radialement externe ;
- lesdites premières extrémités longitudinales desdits gicleurs sont montés dans des cavités de bossages situés sur ladite surface cylindrique externe de la partie radialement interne ;
- ladite partie radialement externe comprend des bras sensiblement radiaux comportant ou portant à leurs extrémités radialement externes lesdits moyens de support,
- lesdits bras sont alignés radialement avec lesdits canaux et comprennent des passages configurés pour être alimentés en lubrifiant sortant desdits canaux et s'étendant sensiblement radialement jusqu'auxdits moyens de support ;
- lesdits bras comprennent à leurs extrémités radialement internes des cuvettes incurvées dont la concavité est orientée radialement vers l'intérieur, pour la récupération de lubrifiant sortant desdits canaux et son acheminent jusqu'auxdits passages ;
- lesdites extrémités radialement internes desdits bras sont écartées d'un jeu radial prédéterminé de ladite surface cylindrique externe afin d'assurer une communication fluidique avec l'environnement extérieur.

La présente invention concerne également une turbomachine comportant un réducteur de vitesse à train épicycloïdal tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en perspective d'un porte-satellites de la technique antérieure,
- la figure 2 est une vue schématique éclatée et en perspective d'un stator, d'un rouet de porte-satellites selon l'invention ainsi que ses gicleurs,
- la figure 3 est une vue schématique en perspective du stator de la figure 2 ;
- la figure 4 est une vue schématique en perspective du rouet du porte-satellites de la figure 2 ;
- la figure 5 est une vue schématique partielle, en coupe axiale, et à plus grande échelle du rouet de la figure 4 ;
- la figure 6 est une vue schématique partielle en coupe transversale du stator et du rouet de la figure 2 ;
- la figure 7 est une vue à plus grand échelle d'un détail de la figure 6 ;
- la figure 8 est une vue schématique partielle en coupe axiale du stator et du rouet de la figure 2.

### Description détaillée d'un mode de réalisation de l'invention

La figure 1 a été décrite dans ce qui précède.

L'invention concerne le domaine des porte-satellites de réducteurs de vitesse à train épicycloïdal de turbomachine, en particulier d'aéronef. La figure 1 et la description qui précède peuvent être utilisées pour apprécier les caractéristiques générales et connues d'un tel réducteur et de son porte-satellites.

L'invention vise plus particulièrement un rouet pour un tel porte-satellites. Un rouet de porte-satellites est une pièce permettant notamment de distribuer un lubrifiant, tel que de l'huile, dans différentes zones sensibles à une élévation thermique et au frottement sec au sein du réducteur. Le rouet possède deux principales zones de distribution d'huile : les engrènements ou dentures du solaire et des satellites et les paliers des satellites.

La figure 2 montre un rouet 130 de porte-satellites selon l'invention, qui est ici associé à un stator 132 qui peut être un stator de la turbomachine ou du réducteur.

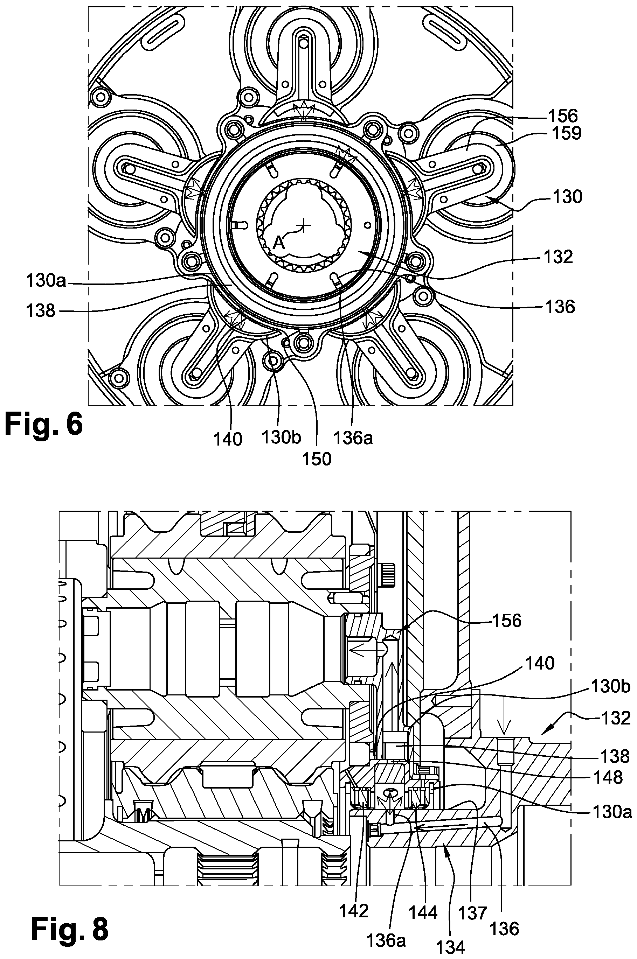

Le stator 132 est visible en perspective à la figure 2, en coupe transversale à la figure 6 et en coupe axiale à la figure 8. Il présente une symétrie de révolution autour d'un axe, qui est l'axe A de rotation du porte-satellites et donc du rouet 130.

Le stator 132 comprend une portion cylindrique 134 qui est destinée à être entourée par le rouet 130. Comme cela est visible à la figure 8, le stator 132 comprend des canalisations 136 de circulation d'huile qui débouchent par des orifices 136a sur la surface cylindrique externe 137 du stator 132 en vue de la projection de lubrifiant radialement vers l'extérieur.

Le rouet 130 comprend plusieurs pièces visibles à la figure 2. Ces pièces sont solidaires entre elles et destinées à être solidaires du porte-satellites et donc entraînées en rotation autour de l'axe A. Elles forment donc un rotor qui tourne autour du stator 132 précité.

Parmi les pièces du rouet 130, il comprend une partie radialement interne 130a et une partie radialement externe 130b qui s'étend autour de la partie radialement interne.

La partie radialement interne 130a a une forme annulaire s'étendant autour de l'axe A. Elle comprend à sa périphérie interne une gorge annulaire 138 débouchant radialement vers l'intérieur. Elle comprend à sa périphérie externe une surface cylindrique externe 140.

De part et d'autre de la gorge 138, c'est-à-dire en amont et en aval de la gorge 138, sont disposés des joints annulaires d'étanchéité dynamique 142, 144, qui sont configurés pour coopérer avec le rotor 132.

Dans l'exemple représenté, la partie radialement interne 130a comprend une partie médiane 130aa à section transversale en forme de U inversé. De cette partie médiane 130aa s'étendent respectivement vers l'amont et vers l'aval des rebords cylindriques 130ab de support des joints 142, 144.. La partie externe 130b est montée sur le rebord cylindrique amont 130ab de la partie radialement interne 130a.

Des bossages 146 sont situés en saillie sur la surface cylindrique externe 140 de la partie 130a. Des canaux 148 sensiblement radiaux traversent la partie 130a et s'étendent entre le fond de la gorge 138 et la surface 140, pour le passage de lubrifiant. Des conduits 150 sensiblement radiaux sont en outre formés dans la partie 130a et s'étendent entre le fond de la gorge 138 et des cavités internes 152 des bossages 146.

Les cavités 152 débouchent axialement et sont destinées à recevoir des premières extrémités longitudinales de gicleurs 154 de lubrifiant. Du lubrifiant contenu dans la gorge 138 peut en fonctionnement s'écouler jusqu'aux canaux 148 et aux conduits 150. Les conduits 150 alimentent en lubrifiant les cavités 152 et les gicleurs 154, qui sont configurés pour pulvériser du lubrifiant sur les dentures des satellites et du solaire du réducteur.

Les canaux 148 débouchent par des orifices 148a sur la surface 140 de la partie interne 130a. La partie radialement externe 130b s'étend autour de cette surface 140.

La partie radialement externe 130b a une forme annulaire s'étendant autour de l'axe A. Elle comprend des bras 156 s'étendant sensiblement radialement vers l'extérieur et qui comprennent à leurs extrémités radialement externes des moyens de support des axes des satellites. Ces moyens de support de chaque bras 156 comprennent par exemple un rebord cylindrique 158 orienté axialement et autour duquel est destinée à être montée une extrémité axiale 159 (figure 6) d'un axe de satellites.

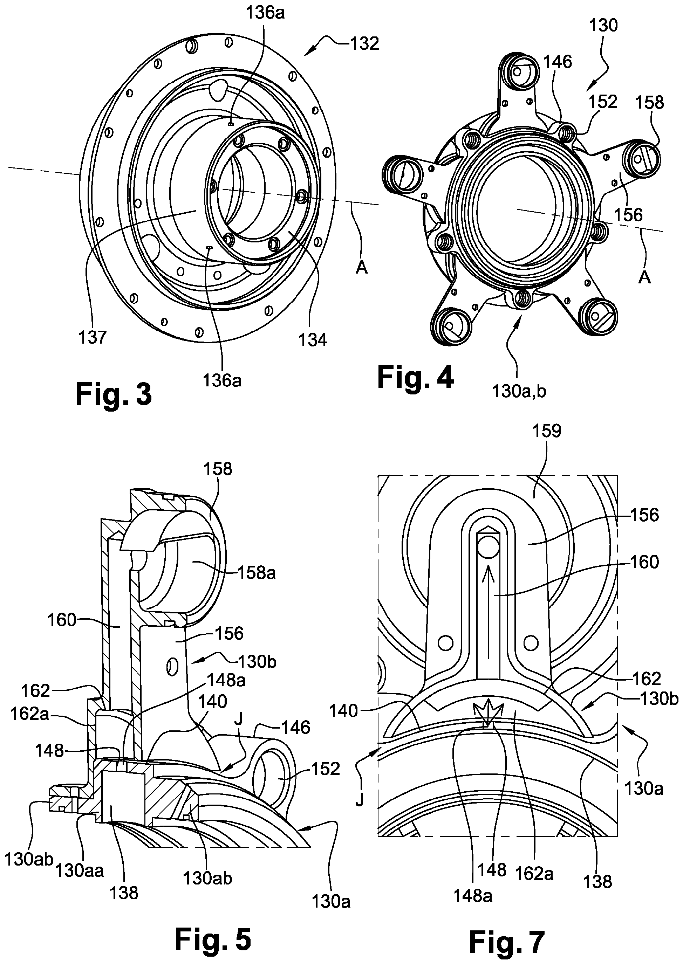

Le rebord cylindrique 158 définit intérieurement une chambre 158a qui est alimentée en lubrifiant par un passage 160 sensiblement radial formé dans le bras 156 (figure 5). Ce passage 160 communique donc à son extrémité radialement externe avec la chambre 158a, et à son extrémité radialement interne avec une cuvette 162 de forme incurvée dont la concavité est orientée radialement vers l'intérieur (figures 5 et 7).

En position montée de la partie externe 130b sur la partie interne 130a, les bras 156 sont alignés radialement avec les canaux 148 et les orifices 148 a de ces derniers sont alignés avec les cuvettes 162. Le lubrifiant sortant des orifices 148a est projeté vers les cuvettes 162 qui, grâce à leur forme, achemine le lubrifiant jusqu'aux passages 160. Le lubrifiant est ensuite acheminé jusqu'aux chambres 158a en vue de l'alimentation des axes159 et des paliers des satellites.

Comme on le voit à la figure 7, les extrémités radialement internes des bras sont écartées radialement d'un jeu J prédéterminé de la surface 140 de la partie interne 130a. Ce jeu permet de relier les poches 162a définies par les cuvettes 162 à l'atmosphère externe dans laquelle est situé le réducteur. Ceci permet de rendre cette lubrification indépendante de la lubrification des gicleurs 154 qui, comme on l'a vu, bénéficie de la pression additionnelle générée par les champ centrifuge qui s'additionne à la pression de la pompe d'alimentation en lubrifiant des canalisations 136 du stator 132.

L'invention combine ainsi la pression fournie par la pompe d'alimentation du réducteur à la pression centrifuge générée par le rotor pour atteindre plus facilement les engrènements.

Comme décrit dans ce qui précède, le lubrifiant passe par plusieurs étapes avant de cibler les postes de pertes et les postes à lubrifier :
- après avoir traversé le stator 132, le lubrifiant arrive dans le rotor (rouet 130) par le biais des canalisations 136 dirigées radialement ; le lubrifiant arrive sous pression grâce aux joints dynamiques 142, 144 assurant l'étanchéité entre le rotor et le stator ;
- une fois arrivé dans le rotor, le lubrifiant est soumis au champ centrifuge ; le rotor se comporte comme une pompe s'additionnant à la pression du groupe de lubrification au champ centrifuge généré par sa propre rotation ; ici, le débit de lubrifiant se répartit entre les gicleurs de lubrification des dentures et les paliers, en fonction des pertes de charge des circuits ;
- après avoir traversé les canaux 148, le lubrifiant est remis à la pression atmosphérique ; le jeu J évite que le phénomène de pompage affecte la lubrification des paliers ;
- le lubrifiant allant aux paliers est ensuite entrainé par le champ centrifuge du rotor.

## Revendications

1. Réducteur de vitesse à train épicycloïdal de turbomachine comprenant un porte satellites avec un rouet (130), ledit rouet (130) étant destiné à être solidaire en rotation dudit porte-satellites et à être mis en rotation autour d'un axe A dudit réducteur, ledit rouet ayant une forme annulaire autour dudit axe et comportant des moyens (158) de support d'axes (151) de rotation de satellites dudit réducteur, ledit rouet comportant des moyens de lubrification de dentures desdits satellites et de paliers desdits axes, lesdits moyens de lubrification comportant une gorge annulaire (138) située à la périphérie interne dudit rouet et débouchant radialement vers l'intérieur, ladite gorge étant reliée à des moyens d'alimentation et/ou de pulvérisation de lubrifiant, **caractérisé en ce que** le rouet comporte des moyens annulaires (142, 144) d'étanchéité dynamique situés à la périphérie interne dudit rouet, de part et d'autre de ladite gorge, et configurés pour coopérer avec un stator (132) du réducteur ou de la turbomachine destiné à s'étendre à l'intérieur du rouet et coaxialement à ce dernier.

2. Réducteur selon la revendication précédente, dans lequel le rouet est réalisé en deux parties annulaires, respectivement radialement externe (130b) et interne (130a), s'étendant sensiblement l'une autour de l'autre, ladite partie radialement externe comprenant lesdits moyens de support (158) et ladite partie radialement interne comprenant ladite gorge (138) et portant lesdits moyens d'étanchéité (142, 144).

3. Réducteur selon la revendication précédente, dans lequel ladite partie radialement interne (130a) comporte des canaux (148) sensiblement radiaux et des conduits sensiblement radiaux (150) de passage de lubrifiant, dont les extrémités radialement internes débouchent dans ladite gorge (138).

4. Réducteur selon la revendication précédente, dans lequel lesdits canaux (148) débouchent à leurs extrémités radialement externes sur une surface cylindrique externe (140) de ladite partie radialement interne (130a), qui est destinée à être au moins en partie recouverte par ladite partie radialement externe (130b).

5. Réducteur selon la revendication 3 ou 4, dans lequel lesdits conduits (150) sont en communication fluidique avec des premières extrémités longitudinales de gicleurs de lubrifiant (154), qui sont montés en porte-à-faux à la périphérie externe de ladite partie radialement externe (130b).

6. Réducteur selon l'une des revendications 2 à 5, dans lequel ladite partie radialement externe (130b) comprend des bras (156) sensiblement radiaux comportant ou portant à leurs extrémités radialement externes lesdits moyens de support (158).

7. Réducteur selon la revendication précédente, en dépendance de la revendication 4, dans lequel lesdits bras (156) sont alignés radialement avec lesdits canaux (148) et comprennent des passages (160) configurés pour être alimentés en lubrifiant sortant desdits canaux et s'étendant sensiblement radialement jusqu'auxdits moyens de support (158).

8. Réducteur selon la revendication précédente, dans lequel lesdits bras (156) comprennent à leurs extrémités radialement internes des cuvettes (162) incurvées dont la concavité est orientée radialement vers l'intérieur, pour la récupération de lubrifiant sortant desdits canaux (148) et son acheminent jusqu'auxdits passages (160).

9. Réducteur selon la revendication précédente, dans lequel lesdites extrémités radialement internes desdits bras (156) sont écartées d'un jeu radial (J) prédéterminé de ladite surface cylindrique externe (140) afin d'assurer une communication fluidique avec l'environnement extérieur.

10. Turbomachine d'aéronef, **caractérisée en ce qu'**elle comprend un réducteur de vitesse à train épicycloïdal selon l'une des revendications 1 à 9.

## Patentansprüche

1. Turbomaschinen-Untersetzungsgetriebe mit Planetengetriebe, das einen Planetenradträger mit einem Laufrad (130) umfasst, wobei das Laufrad (130) dazu bestimmt ist, drehfest mit dem Planetenradträger verbunden zu sein und um eine Achse A des Untersetzungsgetriebes in Drehung versetzt zu werden, wobei das Laufrad eine Ringform um die Achse aufweist und Mittel (158) zum Stützen von Satellitenrad-Rotationsachsen(151) des Untersetzungsgetriebes umfasst, wobei das Laufrad Schmiermittel von Verzahnungen der Satellitenräder und Lager der Achsen umfasst, wobei die Schmiermittel eine Ringnut (138) umfassen, die an dem inneren Umfang des Laufrads liegt und radial nach innen mündet, wobei die Nut mit Schmiermittelzufuhr- und/oder -sprühmitteln verbunden ist, **dadurch gekennzeichnet, dass** das Laufrad ringförmige Mittel (142, 144) zum dynamischen Abdichten umfasst, die an dem inneren Umfang des Laufrads zu beiden Seiten der Nut liegen und dazu konfiguriert sind, mit einem Stator (132) des Untersetzungsgetriebes oder der Turbomaschine, der dazu bestimmt ist, sich in dem Inneren des Laufrads und koaxial zu diesem Letzteren zu erstrecken, zusammenzuwirken.

2. Untersetzungsgetriebe nach dem vorstehenden Anspruch, wobei das Laufrad aus zwei ringförmigen Teilen, jeweils einem radial äußeren (130b) und einem radial inneren (130a), hergestellt ist, die sich im Wesentlichen um einander erstrecken, wobei der radial äußere Teil Stützmittel (158) umfasst, und der radial innere Teil die Nut (138) umfasst und die Dichtmittel (142, 144) trägt.

3. Untersetzungsgetriebe nach dem vorstehenden Anspruch, wobei der radial innere Teil (130a) Kanäle (148) umfasst, die im Wesentlichen radial sind, und im Wesentlichen radiale Leitungen (150) zum Durchgehen von Schmiermittel, deren radial innere Enden in der Nut (138) münden.

4. Untersetzungsgetriebe nach dem vorstehenden Anspruch, wobei die Kanäle (148) an ihren radial äußeren Enden auf einer äußeren zylindrischen Oberfläche (140) des radial inneren Teils (130a) münden, die dazu vorgesehen ist, mindestens zum Teil von dem radial äußeren Teil (130b) abgedeckt zu sein.

5. Untersetzungsgetriebe nach Anspruch 3 oder 4, wobei die Leitungen (150) in Fluidverbindung mit ersten Längsenden von Schmiermitteleinspritzdüsen (154) stehen, die auskragend an dem äußeren Umfang des radial äußeren Teils (130b) montiert sind.

6. Untersetzungsgetriebe nach einem der Ansprüche 2 bis 5, wobei der radial äußere Teil (130b) im Wesentlichen radiale Arme (156) umfasst, die an ihren radial äußeren Enden die Stützmittel (158) umfassen oder tragen.

7. Untersetzungsgetriebe nach dem vorstehenden Anspruch, abhängig von Anspruch 4, wobei die Arme (156) radial mit den Kanälen (148) ausgerichtet sind und Passagen (160) umfassen, die dazu konfiguriert sind, mit Schmiermittel, das aus den Kanälen, und die sich im Wesentlichen radial bis zu den Stützmitteln (158) erstrecken, versorgt zu werden.

8. Untersetzungsgetriebe nach dem vorstehenden Anspruch, wobei die Arme (156) an ihren radial inneren Enden einwärts gebogene Schalen (162), deren Konkavität radial nach innen ausgerichtet ist, für das Rückgewinnen von Schmiermittel, das aus den Kanälen (148) austritt, und sein Befördern bis zu den Passagen (160) umfassen.

9. Untersetzungsgetriebe nach dem vorstehenden Anspruch, wobei die radial inneren Enden der Arme (156) um ein vorbestimmtes radiales Spiel (J) von der äußeren zylindrischen Oberfläche (140) beabstandet sind, um eine Fluidverbindung mit der äußeren Umgebung sicherzustellen.

10. Luftfahrzeugturbomaschine, **dadurch gekennzeichnet, dass** sie ein Untersetzungsgetriebe mit Planetenradgetriebe nach einem der Ansprüche 1 bis 9 umfasst.

## Claims

1. Planetary gear speed reducer of a turbine engine comprising a planet carrier with an impeller (130), said impeller (130) being intended to be integral in rotation with said planet carrier and to be set into rotation around an axis A of said reducer, said impeller having an annular shape around said axis and comprising means (158) for supporting axes (151) of rotation of planets of said reducer, said impeller comprising means for lubricating teeth of said planets and bearings of said axes, said lubrication means comprising an annular groove (138) located on the internal periphery of said impeller and opening radially towards the inside, said groove being connected to lubricant supply and/or spray means, **characterised in that** the impeller comprises dynamic annular sealing means (142, 144) located at the inner periphery of said impeller, on either side of said groove, and configured to interact with a stator (132) of the reducer or of the turbine engine intended to extend inside of and coaxially with the latter.

2. Planetary gear speed reducer according to the preceding claim, wherein said impeller is made of two annular portions, respectively radially external (130b) and internal (130a), extending substantially around one another, said radially external portion comprising said means for supporting (158) and said radially internal portion comprising said groove (138) and carrying said sealing means (142, 144).

3. Planetary gear speed reducer according to the preceding claim, wherein said radially internal portion (130a) comprises substantially radial channels (148) and substantially radial ducts (150) for the passage of lubricant, of which the radially internal ends open into said groove (138).

4. Planetary gear speed reducer according to the preceding claim, wherein said channels (148) open at the radially external ends thereof onto an external cylindrical surface (140) of said radially internal portion (130a), which is intended to be at least partially covered by said radially external part (130b).

5. Planetary gear speed reducer according to claim 3 or 4, wherein said ducts (150) are in fluidic communication with first longitudinal ends of lubricant nozzles (154), which are cantilever-mounted at the outer periphery of said radially external portion (130b).

6. Planetary gear speed reducer according to one of claims 2 to 5, wherein said radially external portion (130b) comprises substantially radial arms (156) comprising or carrying, at the radially external ends thereof, said means for supporting (158).

7. Planetary gear speed reducer according to the preceding claim, dependent on claim 4, wherein said arms (156) are radially aligned with said channels (148) and comprise passages (160) configured to be supplied with lubricant exiting from said channels and extending substantially radially to said means for supporting (158).

8. Planetary gear speed reducer according to the preceding claim, wherein said arms (156) comprise, at the radially internal ends thereof, curved wells (162) of which the concavity is oriented radially towards the inside, for the recovery of lubricant exiting from said channels (148) and the conveyance thereof to said passages (160).

9. Planetary gear speed reducer according to the preceding claim, wherein said radially internal ends of said arms (156) are separated by a predetermined radial clearance (J) from said external cylindrical surface (140) in order to ensure a fluidic communication with the outside environment.

10. Aircraft turbine engine, **characterised in that** it comprises a planetary gear speed reducer such as defined in one of claims 1 to 9.
